## Europäisches Patentamt

## European Patent Office

## Office européen des brevets

(11) Veröffentlichungsnummer: **0 127 136 B1**

(12) **EUROPÄISCHE PATENTSCHRIFT**

(45) Veröffentlichungstag der Patentschrift: **08.08.90**

(51) Int. Cl.⁵: **H 04 B 14/04**

(21) Anmeldenummer: **84105937.1**

(22) Anmeldetag: **24.05.84**

(54) Verfahren zur Übertragung von digital codierten Analogsignalen.

(30) Priorität: **24.05.83 DE 3318774**

(43) Veröffentlichungstag der Anmeldung:
**05.12.84 Patentblatt 84/49**

(45) Bekanntmachung des Hinweises auf die
Patenterteilung:
**08.08.90 Patentblatt 90/32**

(84) Benannte Vertragsstaaten:
**DE FR GB**

(56) Entgegenhaltungen:
**EP-A-0 041 895**
**US-A-4 156 111**

**IEEE ELECTRONICS AND AEROSPACE
SYSTEMS CONVENTION, EASCON '79,
Arlington, 25.-27. September 1979, Band 2,
Seiten 327-334, IEEE; R.I. McFARLAND Jr.:
"Protocols in a computer internetworking
environment"**

(73) Patentinhaber: **Siemens Aktiengesellschaft
Wittelsbacherplatz 2
D-8000 München 2 (DE)**

(73) Patentinhaber: **Philips Kommunikations
Industrie AG
Thurn-und-Taxis-Strasse 10
D-8500 Nürnberg 10 (DE)**

(73) Patentinhaber: **ANT Nachrichtentechnik GmbH
Gerberstrasse 33
D-7150 Backnang (DE)**

(72) Erfinder: **Hessenmüller, Horst, Dipl.-Ing.
Taunusstrasse 125
D-6101 Rossdorf (DE)**

(74) Vertreter: **Fuchs, Franz-Josef, Dr.-Ing. et al
Postfach 22 13 17
D-8000 München 22 (DE)**

Courier Press, Leamington Spa, England.

## Beschreibung

Die Erfindung betrifft eine Verfahren zur Übertragung von digital codierten Analogsignalen gemäß dem Oberbegriff des Hauptanspruches. Verfahren dieser Art finden vorzugsweise Anwendung bei der digitalen Übertragung hochwertiger Tonsignale über Rundfunksatelliten. Digitale Paketmultiplexverfahren ermöglichen durch ihre große Flexibilität die Unterbringung verschiedenster Digitalsignale in gleichartig aufgebauten Datenpaketen.

Es ist bekannt, bei der digitalen Codierung von Analogsignalen eine Block- oder Quasimomentanwertkompandierung vorzusehen, so daß anstelle der beim Momentanwertkompander verwendeten ungleichmäßig gestuften Quantisierungsskala mehrere gleichmäßig gestufte Quantisierungsskalen verwendet werden, deren Quantisierungsintervallgrößen sich jeweils um den Faktor 2 unterscheiden. Bei Codiereinrichtungen für hochwertige Tonsignale mit derartigen Kompandern wird eine bestimmte Anzahl von Abtastwerten — beispielsweise 32 — zunächst gleichmäßig mit der feinsten vorgesehenen Stufung quantisiert und codiert. Die zugehörigen Codeworte werden digital gespeichert. Dann wird in Abhängigkeit vom höchstwertigen der gespeicherten Codeworte und von der für die Übertragung gewählten Anzahl der Bits je Wort die feine Quantisierung entweder beibehalten oder vergröbert.

Dies geschieht beispielsweise dadurch, daß in einem ersten Schritt gleichmäßig quantisiert und in 14 bit codiert wird. Nach Feststellung des höchstwertigen Codewortes werden von den 14 bit beispielsweise 4 bit unterdrückt, je nach Wertigkeit des höchstwertigen Codewortes. Voraussetzung für dieses Verfahren ist, daß zu jedem der aus 32 Codeworten bestehenden Blöcke ein aus mehreren zusätzlich zu übertragenden Bit bestehendes Skalenfaktorwort hinzugefügt wird, das eine Aussage über die gewählte Quantisierungsskala macht. Außerdem muß eine Taktsynchronisation auf der Empfangsseite erfolgen.

Der bekanntgewordene Systemvorschlag NICAM 3 der British Broadcasting Corporation (The Radio and Electronic Engineer, Vol 50, Jahrgang 1980 No 10, S. 519—530) verwendet eine Quantisierungskennlinie mit s = 1024 Intervallen, N = 10 bit pro Abtastwert und 32 Abtastwerten pro Block. Dieses Verfahren hat die Europäische Rundfunkunion dem CCIR zur Anwendung beim . Rundfunksatellitendienst vorgeschlagen.

Beim vorstehend beschriebenen Codierverfahren ist es erforderlich, daß dem empfangsseitigen Decodierer eine Blockkennung übermittelt wird, die den Anfang der Codierblöcke kennzeichnet.

Ein Übertragungsverfahren für Codierblöcke variabler Länge ist aus US—A—4 156 111 bekannt. Es ist weiterhin bekannt, zusätzlich zu jedem codierten Abtastwert eine Bit zu Minderung des Einflusses von auf dem Übertragungsweg entstehenden Bitfehlern mit zu übertragen. Mit diesem Bit wird eine Paritätsprüfung bei

spielsweise der fünf höchstwertigen Bits durchgeführt. Wird auf der Empfangsseite eine Paritätsverletzung infolge eines Bitfehlers in den geschützten Bits eines Codewortes festgestellt, so wird das fehlerhalfte Codewort unterdrückt und durch einen Schätzwert ersetzt, der biespielsweise durch lineare Interpolation zwischen den Codeworten gewonnen werden kann, die dem fehlerhaften Codewort zeitlich benachbart, sind. Durch diesen einfachen Schutz gegen Bitfehler, der — bezogen auf das vorstehend beschriebene Codierbeispiel — die Anzahl der Bits je Abtastwert auf elf erhöht, können mittlere Bitfehlerhäufigkeiten bis ca. $10^{-5}$ toleriert werden. Bei ungünstigeren Werten der Bitfehlerhäufigkeit von zum Beispiel $10^{-3}$, die etwa beim Satellitenrundfunk mit digitaler Tonübertragung am Rande oder außerhalb des Versorgungsgebietes auftreten können, ist es erforderlich, für den Bitfehlerschutz wesentlich mehr zusätzliche Übertragungskapazität vorzusehen und fehlergeschützte Codes (BCH-Code, Hamming-Code usw.) zu verwenden.

Es ist weiterhin bekannt, daß für die digitale Multiplexbildung mehrere Kanäle ein kontinuierliches Multiplex mit fester oder in geringen Grenzen variabler Zeiteinteilung des Pulsrahmens oder aber ein Paketmultiplex verwendet werden kann.

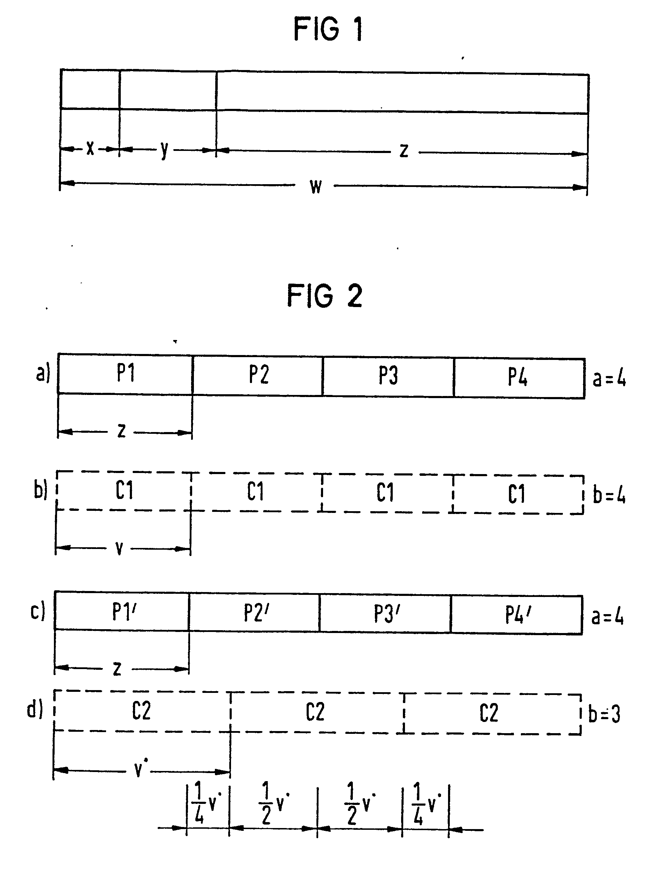

Bei letzterem ist die nutzbare Information in Paketen untergebracht, deren prinzipieller Aufbau in Figur 1 dargestellt ist. Jedes Paket der Länge w ist untergliedert in die Abschnitte x, y und z. Im Abschnitt x ist eine Synchronisierkombination enthalten, die für alle Pakete gleich ist. Der Abschnitt y beinhaltet Adressinformationen, die je nach Kanal bzw. Dienst unterschiedlich ist. x + y wird auch als Kopf des Paketes bezeichnet. Die nutzbaren Daten sind im Nutzteil z enthalten. Da auf jedes Paket eines Paketmultiplexes neu sychronisiert wird (x-Abschnitt), können sowohl die Länge der Pakete, als auch der Zeitpunkt ihres Eintreffens beliebig sein. Es hat sich gezeigt, daß wegen der Notwendigkeit der Übertragung des Paketkopfes die Übertragungsbitrate nur zu 90 bis 95% durch die nutzbaren Daten belegt werden kann.

Die Übertragungsbitrate kann aber ökonomischer genutzt werden, wenn man das Paketmultiplex in einer Weise modifiziert, wie dies im CCIR-Grünbuch, Vol. X and XI Part. 2, Genf 1982, S. 265 beschrieben ist. Dabei wird nur eine einheitliche Paketlänge verwendet. Die Pakete treten in periodischer Folge auf, d.h. ein Paket folgt unmittelbar dem vorhergehenden. Durch diese Maßnahme kann die für Synchronisierzwecke erforderliche Kapazität erheblich verringert werden, da dann kein besonderer Fehlerschutz für die periodisch auftretende Synchronisierkombination aufgewendet zu werden braucht. Es kann die bei einem kontinuierlichen Multiplex üblichen Synchronisierstrategie angewendet werden.

Dieses modifizierte Paketmultiplex hat jedoch den Nachteil, daß bei der Übertragung von digital codierten Tonsignalen mit unterschiedlichem Aufwand an Informationskapazität für den Bitfehlerschutz, wodurch jeder Abtastwert beispielsweise 11 oder 15 bit enthält, die Codierblöcke mit 32 codierten Abtastwerten eine unterschiedliche Anzahl von Bits enthalten. Da man bischer davon ausging, daß durch die Paketbildung gleichzeitig die Grenzen der Codierblöcke mit übertragen werden sollen, lag es nahe, eine ganze Zahl von Codierblöcken je Paket vorzusehen. Dies führt automatisch zu unterschiedlichen Paketlängen bei unterschiedlichen Fehlerschutzverfahren. Dadurch werden unterschiedliche Demultiplexer erforderlich. Außerdem ist bei Anwendung des im CCIR-Grünbuch beschriebenen, modifizierten Paketmultiplex keine gemischte Übertragung von Signalen mit unter schiedlichem Bitfehlerschutz möglich.

Der Erfindung liegt die Aufgabe zugrunde, bei Verwendung einer einheitlichen Paketlänge mit einheitlicher Nutzteillänge Codierblöcke mit von der Nutzteillänge abweichender Länge in den Paketen bei empfangsseitig eindeutiger Erkennung der Grenzen der Codierblöcke zu übertragen. Diese Aufgabe wird durch die im Hauptspruch gekennzeichnete Erfindung gelöst. Vorteilhafte Weiterbildungen der Erfindung sind in abhängigen Ansprüchen gekennzeichnet.

Die mit der Erfindung erzielbaren Vorteile bestehen insbesondere darin, daß mit einer einheitlichen Paketlänge w, die beispielsweise auf den schon beschriebenen einfachen Bitfehlerschutz optimiert ist, auch mit höherem Fehlerschutzaufwand versehene codierte Tonsignale übertragen werden können und dabei eine einheitlicher Demultiplexer eingesetzt werden kann. Eine weiterer Vorteil betrifft die Möglichkeit der gemischten Übertragung von codierten Tonsignalen mit unterschiedlichem Bitfehlerschutz. Außerdem kann ein Paketverlust leicht erkannt werden.

Eine Ausführungsbeispiel der Erfindung ist in Fig. 2 dargestellt. Fig. 2a zeigt vier Nutzteile P1 bis P4 einer Länge z von vier Paketen ohne Paketkopf. Die Länge z ist so gewählt, daß sie eines identisch einer ersten Codierblocklänge y (Fig. 2b) eines ersten Codierblockes C1 ist. Dieser ist beispielsweise einem Tonsignal mit einfachem Bitfehlerschutz zugeordnet, der durch Übertragung eines Paritätsbits zu jedem codierten Abtastwert erreicht wird. Die empfangsseitige Erkennung der Grenzen der Codierblöcke ist einfach.

Soll nun der Bitfehlerschutz durch zusätzliche Bits je Codewort verbessert werden, so ergibt sich eine neuer Codierblock C2 der Länge v' (Fig. 2d), der in Nutzteilen P1' — P4' (Fig. 2c) übertragen werden soll. Durch Vergleich der Figuren 2c und 2d zeigt sich, daß die zeitliche Lage der Grenzen der Codierblöcke C2 bezogen auf die Grenzen der Pakete P1' und P4' unterschiedlich ist. Es gibt demzufolge a = 4 Pakete P1' — P4', die insgesamt b = 3 Codierblöcke C2 enthalten. Jedes Paket P1' — P4' enthält dabei einen oder mehrere unterschiedliche Längenteile eines Codierblocks C2. Dieser Umstand wird mit c = 2 bit mittels freier Informationskapazität im Paketkopf zum Empfänger signalisiert.

Ein Zahlenbeispiel soll dies verdeutlichen. Für zwei unterschiedliche Bitfehlerschutzverfahren ist die Anzahl der Bits je Abtastwert 11 bzw. 15. Ein Codierblock C1 oder C2 für ein stereophonisches Tonsignal enthält $2 \cdot 32 = 64$ codiert Abtastwerte. Man erhält für die Länge des Codierblockes C1 v $= 64 \cdot 11$ bit $+ 16$ bit $= 720$ bit. Die darin enthaltenen 16 zusätzlichen Bits bieten sich beispielsweise zur Übertragung der Skaleninformation an, um die Faktoren a und b möglichst klein zu halten. Die erste Codierblocklänge v ist gleich der Länge z des Nutzteils P1–P4, also 720 bit. Für den Codierblock C2 ergibt sich eine zweite Codierblocklänge $v' = 64 \cdot 15$ bit $= 960$ bit, so daß die Länge $z = \frac{3}{4} v'$, die Anzahl der verschiedenen Pakete P1'–P4' a = 4 und die Anzahl der zusätzlich erforderlichen Bit c = 2 ist.

## Patentansprüche

1. Verfahren zur Übertragung von in Codierblöcken zusammengefaßten digital codierten Analogsignalen zu einem Empfänger mit Hilfe eines digitalen Paketmultiplexsystems unter Verwendung einer bestimmten Anzahl (a) von gleichlangen Paketen einer Länge (w) mit einem Paketkopf einer Länge (x+y) und einem Nutzteil (P1–P4) einer Länge (z), die mit einer ersten Codierblocklänge (v) optimiert ist, dadurch gekennzeichnet, daß zur Übertragung von Codierblöcken (C2) einer zweiten Codierblocklänge (v'), die nicht zur optimierten Länge (z) des Nutzteils (P1–P4) paßt, der Anzahl (a) von gleichlangen Nutzteilen (P1–P4) eine andere Anzahl (b) Codierblöcke der zweiten Codierblocklänge (v') derart zugeordnet wird, daß eine der genannten Anzahl (a) entsprechende Anzahl von Nutzteilen (P1'–P4') der optimierten Länge (z) entsteht, die bezüglich ihrer Zusammensetzung aus Codierblockteilen eine unterschiedliche Struktur aufweisen, und daß die Struktur dieser Nutzteile (P1'–P4') in vorhandener freier Übertragungskapazität des Paketkopfes an den Empfänger signalisiert wird.

2. Verfahren nach Anspruch 1, dadurch gekennzeichnet, daß für die Signalisierung der Inhaltsstruktur der Nutzteile (P1'–P4') eine Anzahl von c bit verwendet werden, wobei der Zusammenhang zwischen den ganzzahligen Größen a und c durch die Formel $a = 2^c$ ausgedrückt wird.

3. Verfahren nach Anspruch 2, dadurch gekennzeichnet, daß für Zwischenwerte von a in der Formel der nächst größere c-Wert gewählt wird.

4. Verfahren nach Anspruch 1, dadurch gekennzeichnet, daß für die Signalisierung der Inhaltsstruktur von Codierblöcken auch der ersten (v) oder weiterer Codewortlängen den c bit wenigstens ein weiteres bit angefügt wird.

## Revendications

1. Procédé pour la transmission de signaux analogiques codés de façon numérique et réunis sous la forme de blocs de codage, à un récepteur, à l'aide d'un système multiplex, à transmission par paquets, moyennant l'utilisation d'un nombre déterminé (a) de paquets possédant une même longueur (w), avec une tête du paquet possédant une longueur (x+y) et une partie utile (P1—P4) possédant une longueur (z), qui est optimisée à l'aide d'une première longueur (v) des blocs de codage, caractérisé par le fait que pour la transmission de blocs de codage (C2) possédant une seconde longueur (v'), qui n'est pas adaptée à la longueur optimisée (z) de la partie utile (PI—P4), au nombre (a) de parties utiles de même longueur (P1—P4) est associé un autre nombre (b) de blocs de codage possédant la seconde longueur (v') de sorte que l'on obtient un nombre, qui correspond audit nombre (a), de parties utiles (P1'—P4') possédant la longueur optimisée (z), qui ont une structure différente en ce que concerne leur composition à partir de parties de blocs de codage, et que la structure de ces parties utiles (P1'—P4') est signalée au récepteur au moyen de la capacité libre présente de transmission de la tête du paquet.

2. Procédé suivant la revendication 1, caractérisé par le fait que pour la signalisation de la structure du contenu des parties utiles (P1'—P4'), on utilise un nombre de c bits, la relation entre les grandeurs a et c formées de nombres entiers étant exprimée par la formule $a = 2^c$.

3. Procédé suivant la revendication 2, caractérisé par la fait que pour des valeurs intermédiaires de a indiqué par la formule on choisit la valeur c immédiatement supérieure.

4. Procédé suivant la revendication 1, caractérisé par le fait que pour la signalisation de la structure du contenu de blocs de codage possédant également la première longueur de mot de code (v) ou d'autres longueurs de mots de code, au moins un bit supplémentaire est ajouté aux c bits.

## Claims

1. Method of transmitting digitally coded analog signals which are combined in coding blocks to a receiver with the aid of a digital packet multiplex system using a certain number (a) of equally long packets of a length (w), having a packet heat of a length (x+y) and a useful portion (P1—P4) of a length (z), which is optimized to a first coding block length (v), characterized in that, for transmitting coding blocks (C2) of a second coding block length (v') which does not match the optimized length (z) of the useful portion (P1—P4), the number (a) of equally long useful portions (P1—P4) is assigned another number (b) of coding blocks of the second coding block length (v') in such a way that a number, corresponding to the said number (a), of useful portions (P1'—P4') of the optimized length (z) which have a different structure with respect to their composition from coding block portions are produced, and in that the structure of these useful portions (P1'—P4') is signalled to the receiver in existing free transmission capacity of the packet head.

2. Method according to Claim 1, characterized in that a number of c bits are used for signalling the content structure of the useful portions (P1'—P4'), the relationship between the integral values a and c being expressed by the formula $a = 2^c$.

3. Method according to Claim 2, characterized in that the next-highest value of c is selected for intermediate values of a in the formula.

4. Method according to Claim 1, characterized in that at least one further bit is added to the c bits for signalling the content structure of coding blocks also of the first length (v) or further code word lengths.

# FIG 1

# FIG 2